Europäisches Patentamt

European Patent Office

Office européen des brevets

(11) Publication number: **0 250 012**
**A2**

## EUROPEAN PATENT APPLICATION

(21) Application number: 87200872.7

(22) Date of filing: **12.05.87**

(51) Int. Cl.⁴: **B28B 7/36 , B28B 3/02**

(30) Priority: **18.06.86 IT 6749886**

(43) Date of publication of application:
**23.12.87 Bulletin 87/52**

(84) Designated Contracting States:
**BE DE ES FR GR**

(71) Applicant: **Fonderie Officine Meccaniche BONGIOANNI S.p.A.**
**Via G.B. Bongioanni, 13**
**I-12045 Fossano Cuneo(IT)**

(72) Inventor: **Bertola, Giorgio**
**Strada Statale, 18**
**I-12019 Vernante (Cuneo)(IT)**

(74) Representative: **Robba, Eugenio et al**
**Studio "INTERPATENT" via Caboto 35**
**I-10129 Turin(IT)**

(54) System of fixing the elastomeric membrane to the upper die for ceramic products.

(57) In a die for ceramic products with an elastomeric membrane (13) sucked against the upper surface (3) of the die, for better and more rapidly anchoring said membrane (13) to said die (3) there are provided peripherally thereof: a ledge (1) running outwardly relative to the periphery of the die (3) and provided with a groove (5) and/or holes leading to a sucking system constituted by a pipe (9) likewise running peripherally relative to the die (3) outwardly thereof, and a groove (17) provided in the outer edge of the die (3) inwardly of the ledge (1) and having holes (19) on its bottom, said holes communicating with a peripheral chamber (21) in which the vacuum· is produced. Both the ledge (1) and the groove (17) suck in appropriate beads (15) and (23) which may be continuous or constituted by projections or spaced "buttons" provided respectively in the corresponding areas (11) and (13) of the elastomeric membrane.

Said elastomeric membrane (13) is preformed for efficiently adhering to said suction fixing system with considerable saving of time and greater efficiency.

FIG. 3

## "System of fixing the elastomeric membrane to the upper die for ceramic products"

The present invention relates to a system of fixing the elastomeric membrane to the upper die for the production of ceramic products.

It is known that a die for the production of ceramic products such as tiles, dishes and the like is substantially constituted by a support frame of metallic material, with a resin surface representing the object to be moulded and having holes on its surface, which communicate with the chambers of the frame, in which the vacuum or strong depression is produced by sucking, which permits to suck in an elastomeric membrane, which may be preformed or not, and keep it adhering to the surface.

Reference is made particularly to the application for patent of industrial invention No. 67,386-A/85 in the name of the same Applicant, which represents the most advanced stage of technology in this field.

Now, in said described and illustrated embodiment, the elastomeric membrane is secured to the surface of the die by means of a ledge or peripheral edge running along the external periphery of the die and fixing by suitable means, such as fixing screws or the like, said elastomeric membrane to the periphery of the die.

When said elastomeric membrane has to be mounted on the lower surface of the upper die either at the beginning of work or for changing the membrane when it is worn, said mechanical fixing means are not the most practical and above all convenient means for such an application because of the very position of the membrane.

To this has to be added the fact that a mechanical fixing of this kind does not permit said membrane to be stretched as required during the moulding operation, thus causing wrinkles and folds which are inevitably reproduced on the finished product, and does not permit an easy "detachment" of the moulded products from the upper die, so that they remain "stuck" to said upper die.

It is the object of the present invention to overcome these inconveniences by providing means suitable for fixing the elastomeric membrane to the lower surface of the upper die so as to permit it to be easily mounted and ensure a better finish of the surface of the ceramic object and consequent improvement of the quality of the product together with a longer service life of said elastomeric membrane.

The present system is substantially constituted by a bar (or ledge) of metallic material, running perimetrically along the outer periphery of the die and provided with a groove and/or blind holes adapted to be coupled to an appropriate bead or spaced projections of the elastomeric membrane, on the bottom of which holes are made which in the lower portion of the bar communicate with a vacuum distribution system provided, for example, by a tube and metal connections; and by a groove made in the edge of the frame inwardly of the above-mentioned ledge and having on its bottom, holes communicating with a peripheral chamber in which the vacuum is produced by sucking in the appropriate bead of the elastomeric membrane.

A further characteristic of the present invention consists in that the elastomeric membrane, which can be secured to the die by the system described above, is preformed to thus permit further saving of time and manpower.

It is to be noted that due to the effect of said elastomeric membrane adhering to the die by sucking during the pressing step, when said step is interrupted and the above-mentioned sucking ceases, the elastic effect of the membrane, and it is released, permits the object to be detached from the upper die and prevents it from remaining "stuck" thereto.

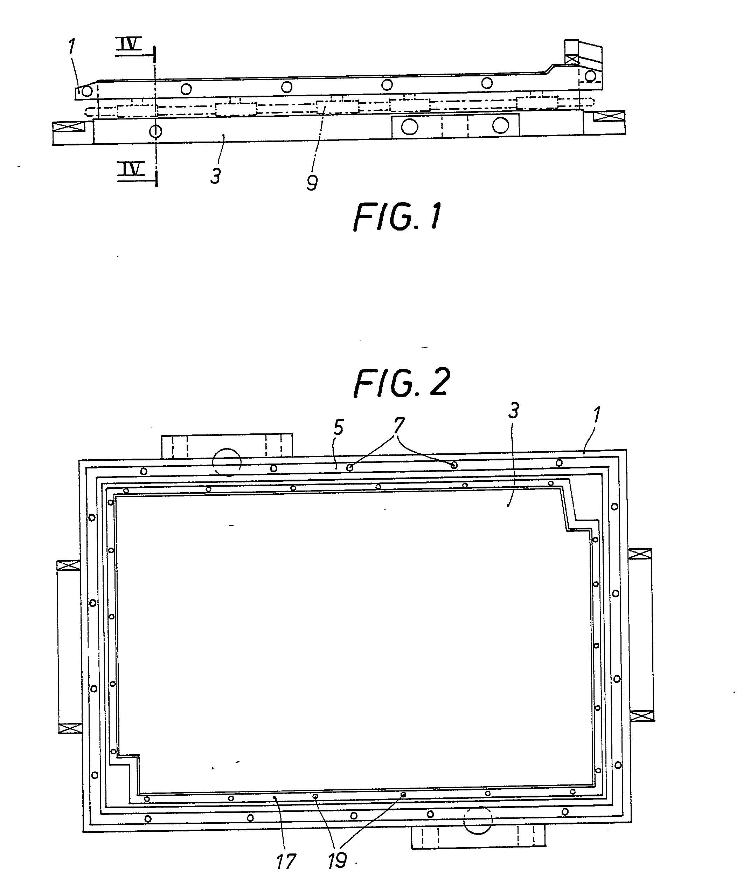

-Fig. 1 is a side view of the upper die according to the invention;

-Fig. 2 is a bottom plan view of the die of Fig. 1;

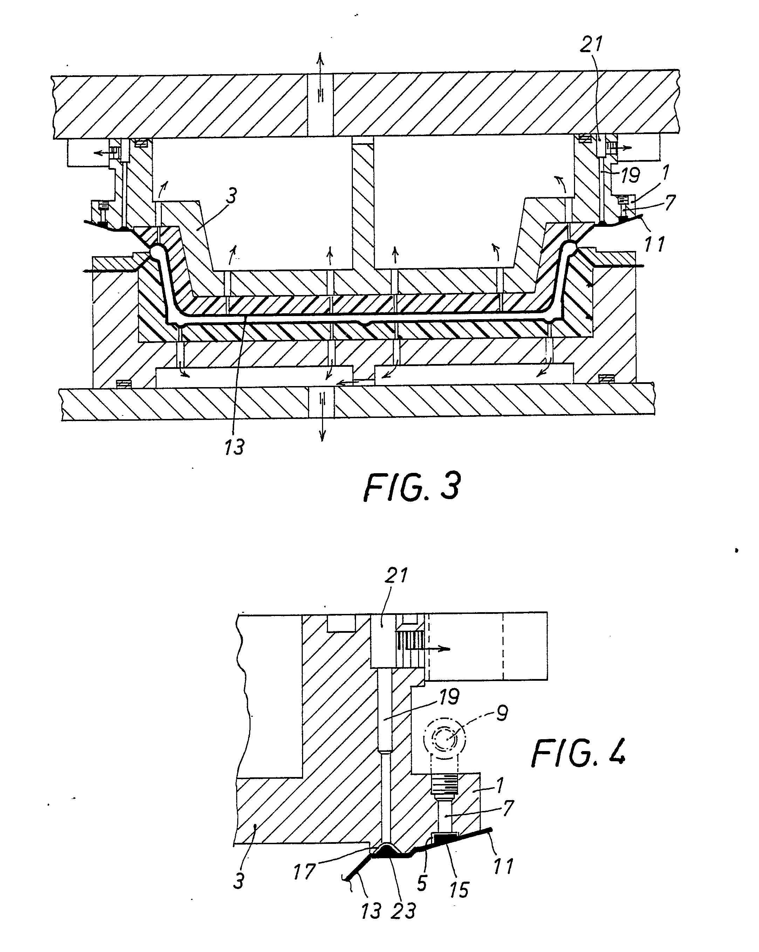

-Fig. 3 is a schematic longitudinal section of the die as applied to a press;

-Fig. 4 is a partially enlarged section taken along the line IV-IV of Fig. 1.

As is evident from the Figures, the present system is made by means of a bar 1 (or ledge) of metallic material, running perimetrically along the outer periphery of the die 3 and provided with a groove 5 and/or blind holes on the bottom of which holes 7 are made which in the lower portion of the bar 1 communicate with a vacuum distribution system made, for example, by means of a pipe and metal connections 9.

As is evident, said bar 1 is the outer portion of the present system, or the portion designed to anchor thereto, by suction, the outer portion or terminal lobe 11 of the elastomeric membrane 13.

Said coupling between the ledge 1 and the elastomeric membrane 13 is effected by means of a continuous bead 15 (being coupled to the groove 5) or a series of projections or spaced "buttons" coupled to appropriate seats.

Inwardly of said first suction groove 5 provided in the bar 1, on the outer edge of the die 3, a second groove 17 is provided which runs peripherally along said outer edge of the die. Provided along said groove 17 are appropriate holes 19 communicating with a peripheral chamber 21 in the outer portion of the die, in which the vacuum is produced by sucking in the elastomeric membrane 13 against the die 3.

It is to be noted that said elastomeric membrane, in the area of the die against which it is sucked, has an appropriate bead 23 adapted to be coupled to an appropriate seat 17 provided for this purpose on the outer portion of the die 3, thus ensuring by this coupling between the bead and the concave seat, a greater efficiency of sucking and sealing as well as an easier positioning of the elastomeric membrane 13 against the die 3 during its positioning.

It goes without saying that, as the die performs the "pressing step", the elastomeric membrane due to the sucking effect remains anchored to the lower surface of the die on which the patterns and/or forms to be reproduced on the ceramic products, namely tiles and/or dishes and the like, are provided; when the above-mentioned sucking effect ceases, the elastic effect of the membrane, as it is released, permits the objects to be detached from the upper die and prevents than from remaining "stuck" thereto.

It is evident that the invention is not limited to the described and illustrated embodiment and that numerous variations and further improvements may be made therein without thereby departing from the scope of the invention.

## Claims

1. System of fixing the elastomeric membrane to the upper die for ceramic products, characterized in that said system is substantially constituted by a bar (1) (or ledge) of metallic material, running perimetrically along the outer periphery of the die (3) and provided with a groove (5) and/or blind holes adapted to be coupled to an appropriate bead (15) or spaced projections of the elastomeric membrane (13), on the bottom of which holes (7) are made which in the lower portion of the bar communicate with a vacuum distribution system (9) made, for example, by means of a pipe and metal connections; and by a groove (17) made in the edge of the frame inwardly of the above-mentioned ledge (1) and having holes (19) on its bottom, said holes communicating with a peripheral chamber (21) in which the vacuum is produced by sucking in the appropriate seat (23) of the elastomeric membrane (13).

2. System of fixing the elastomeric membrane to the upper die for ceramic products according to claim 1, characterized in that the elastomeric membrane, which can be fixed to the die, is preformed.

**FIG. 1**

**FIG. 2**

**FIG. 3**

**FIG. 4**